# EUROPEAN PATENT APPLICATION

(11) **EP 4 491 023 A1**
(43) Date of publication of application: **15.01.2025**
(21) Application number: 23766925.4
(22) Date of filing: 09.03.2023
(51) Int. Cl.: A01N 37/44, A01P 21/00, A01N 25/00

(54) **COMPOSITION FOR COVERING PLANT SEED**

(30) Priority: 09.03.2022 JP 2022036616
(71) Applicant: Kaneka Corporation, Osaka-shi, Osaka 5308288 (JP); Globachem NV, 3800 Sint-Truiden (BE)
(72) Inventor: ASADA Takayuki, Iwata-shi, Shizuoka 438-0802 (JP); MOHRI Taku, Iwata-shi, Shizuoka 438-0802 (JP); YAMANE Hiroaki, Iwata-shi, Shizuoka 438-0802 (JP); NOJIRI Masutoshi, Iwata-shi, Shizuoka 438-0802 (JP); WATANABE Go, Tokyo 107-6028 (JP); CLAES Francis, 3800 Sint-Truiden (BE); VAN DAELE Guy, 3800 Sint-Truiden (BE)
(74) Representative: Hoffmann Eitle
(86) International application number: PCT/JP2023/009058
(87) International publication number: WO 2023/171749

(57) **Abstract**

The present application discloses a composition for coating plant seeds that can promote the initial plant growth or that can promote the plant growth under stress conditions. Compositions for coating plant seeds according to one or more embodiments of the present invention comprise glutathione, amino acid, and an agriculturally acceptable carrier. The glutathione is preferably oxidized glutathione, and the amino acid is preferably L-tryptophan. Other one or more embodiments of the present invention relate to coated seeds comprising plant seeds and, on the surface of the seeds, a composition comprising glutathione and amino acid.

## Description

### Technical Field

The present application discloses a composition for coating plant seeds, coated seeds, a method for cultivating plants, a composition for promoting the initial plant growth, and a composition for promoting the plant growth under stress conditions.

### Background Art

As a method for applying a useful component for plant growth to plants, a method of coating seeds with a composition comprising a useful component is known. This method enables efficient supply of a useful component to plant seeds with the use of a smaller amount of a useful component, compared with methods of applying a useful component to leaves, soil, or water. Accordingly, treatment of seeds with a composition comprising a useful component is expected as a means that enables supply of a useful component to plants with small environmental stress at low cost.

Patent Literature 1 describes a seed-treating composition comprising aromatic amino acid, such as tryptophan, phenylalanine, or tyrosine, and gibberellin. Patent Literature 1 also describes that treatment of wheat seeds with tryptophan facilitates germination of wheat seeds under non-stress conditions and under salt stress conditions. Patent Literature 1 further describes that treatment of wheat seeds with tryptophan and gibberellin synergistically facilitates an increase in seedling fresh weights under non-stress conditions and under salt stress conditions.

Patent Literature 2 describes that use of phenyllactic acid having a root promoting effect on plants in combination with tryptophan enhances a root promoting effect to a significant extent. Patent Literature 2 further describes treatment of seeds with a mixture of phenyllactic acid and tryptophan.

Glutathione is a peptide consisting of three amino acids, namely, L-cysteine, L-glutamic acid, and glycine. Glutathione is present in a living body in the form of: either reduced glutathione (N-(N-γ-L-glutamyl-L-cysteinyl)glycine; hereinafter also referred to as "GSH") in which the thiol group of the L-cysteine residue is in a reduced state, SH; or oxidized glutathione (hereinafter also referred to as "GSSG") in which the thiol group of the L-cysteine residue in two molecules of GSH is oxidized and a disulfide bond is formed between two molecules of glutathione.

Patent Literature 3 describes rice seeds that are treated with at least one active component selected from the group consisting of: a particular benzoxazole compound: at least one coating material selected from the group consisting of iron and an oxide thereof, calcium peroxide, molybdenum, and a molybdenum compound; and a plant growth regulator comprising oxidized glutathione.

Patent Literature 4 describes a seed-treating composition comprising a carrier and an effective amount of glutathione that promotes plant growth or a salt thereof. In Patent Literature 4, the term "glutathione" mainly refers to reduced glutathione (GSH). Patent Literature 4 describes that one or more plant signal molecules incorporated into the seed-treating composition synergistically improve the plant growth promoting effects. Patent Literature 4 provides specific examples of the plant signal molecules: a lipo-chitooligosaccharide compound and chitooligosaccharide.

### Citation List

### Patent Literature

Patent Literature 1: WO 2018/215783
Patent Literature 2: WO 2009/104405
Patent Literature 3: JP 2017-113033 A
Patent Literature 4: WO 2014/070757

### Summary of Invention

### Technical Problem

In order to increase the final yield in cultivation of crop plants, it is critical to promote the initial growth immediately after germination from seeds. To this end, a means for promoting the initial plant growth has been awaited.

Also, a means for promoting the plant growth under stress conditions, such as salt stress conditions, has been awaited.

Accordingly, the present application discloses a composition for coating plant seeds that can promote the initial plant growth or that can promote the plant growth under stress conditions.

The present application also discloses a method for cultivating coated seeds and plants using such composition.

The present application also discloses a composition for promoting the initial plant growth and a composition for promoting the plant growth under stress conditions.

### Solution to Problem

The present application discloses one or more embodiments described below.
(1) A composition for coating plant seeds comprising glutathione, amino acid, and an agriculturally acceptable carrier.
(2) The composition according to (1), wherein the glutathione is oxidized glutathione.
(3) The composition according to (1) or (2), wherein the amino acid is L-tryptophan.
(4) The composition according to any of (1) to (3), which comprises 0.012 parts by weight to 167 parts by weight of the amino acid, relative to 100 parts by weight of the glutathione.
(5) The composition according to any of (1) to (4), which comprises 3 g or more of the glutathione, relative to the amount of the composition used for coating 1 ton of plant seeds.
(6) The composition according to any of (1) to (5), which comprises 0.009 g or more of the amino acid, relative to the amount of the composition used for coating 1 ton of plant seeds.
(7) The composition according to any of (1) to (6), which is used for promoting the initial plant growth.
(8) The composition according to any of (1) to (7), which is used for promoting the plant growth under stress conditions.
(9) The composition according to any of (1) to (8), which is used for increasing the plant yield.
(10) Coated seeds comprising:
   plant seeds; and
   on the surface of the seeds, a composition comprising glutathione and amino acid.
(11) The coated seeds according to (10), wherein the glutathione is oxidized glutathione.
(12) The coated seeds according to (10) or (11), wherein the amino acid is L-tryptophan.
(13) The coated seeds according to any of (10) to (12), wherein the composition comprises 0.012 parts by weight to 167 parts by weight of the amino acid, relative to 100 parts by weight of the glutathione.
(14) The coated seeds according to any of (10) to (13), which comprise 3 g or more of the glutathione, relative to 1 ton of the coated seeds.
(15) The coated seeds according to any of (10) to (14), which comprise 0.009 g or more of the amino acid, relative to 1 ton of the coated seeds.
(16) A method for cultivating plants comprising:
   seeding the coated seeds according to any of (10) to (15); and
   growing the plants from the seeded coated seeds.
(17) The method according to (16), wherein the step of growing plants comprises promoting the initial plant growth.
(18) The method according to (16) or (17), wherein the step of growing plants comprises increasing the density of the plants, which is determined by dividing the fresh weight of the aboveground part of the plants by the height of the aboveground part of the plants.
(19) The method according to any of (16) to (18), wherein the step of growing plants comprises increasing the plant yield.
(20) The method according to any of (16) to (19), wherein the step of growing plants comprises growing the plants under stress conditions.
(21) A composition for promoting the initial plant growth comprising glutathione and 0.012 parts by weight to 167 parts by weight of amino acid, relative to 100 parts by weight of the glutathione.
(22) A composition for promoting the plant growth under stress conditions comprising glutathione and 0.012 parts by weight to 167 parts by weight of amino acid, relative to 100 parts by weight of the glutathione.
(23) A composition for increasing the plant yield comprising glutathione and 0.012 parts by weight to 167 parts by weight of amino acid, relative to 100 parts by weight of the glutathione.

The description incorporates the contents disclosed by JP Patent Application No. 2022-036616, based on which the priority of the present application claims.

### Advantageous Effects of Invention

The composition for coating plant seeds according to one or more embodiments of the present invention, coated seeds using such composition, and a method for cultivating plants using such composition are useful for promotion of the initial plant growth and for promotion of the plant growth under stress conditions.

Application of the composition for promoting the initial plant growth according to one or more embodiments of the present invention to plants enables promotion of the initial plant growth.

Application of the composition for promoting the plant growth under stress conditions according to one or more embodiments of the present invention to plants enables promotion of the plant growth under stress conditions.

### Brief Description of Drawings

[Figure 1] Figure 1 shows the rate of change (%) in the fresh weight of the aboveground part of *Zea mays* grown under non-stress conditions from seeds treated with different amounts of tryptophan (Trp) and oxidized glutathione (GSSG) in Example 1, relative to that of the control group.
[Figure 2] Figure 2 shows the rate of change (%) in the density of *Zea mays* grown under non-stress conditions from seeds treated with different amounts of tryptophan and oxidized glutathione in Example 1, relative to that of the control group.
[Figure 3] Figure 3 shows the rate of change (%) in the fresh weight of the aboveground part of *Zea mays* grown under salt stress conditions from seeds treated with different amounts of tryptophan and oxidized glutathione in Example 2, relative to that of the control group.
[Figure 4] Figure 4 shows the height, the number of leaves, the fresh weight of the aboveground part, and the density of *Zea mays* grown under salt stress conditions from seeds treated with different amounts of tryptophan and oxidized glutathione in Example 2.
[Figure 5] Figure 5 shows the rate of change (%) in the fresh weight of the aboveground part of wheat grown under non-stress conditions from seeds treated with different amounts of tryptophan and oxidized glutathione in Example 3, relative to that of the control group.
[Figure 6] Figure 6 shows the rate of change (%) in the density of wheat grown under non-stress conditions from seeds treated with different amounts of tryptophan and oxidized glutathione in Example 3, relative to that of the control group.
[Figure 7] Figure 7 shows the rate of change (%) in the fresh weight of the aboveground part of wheat grown under salt stress conditions from seeds treated with different amounts of tryptophan and oxidized glutathione in Example 4, relative to that of the control group.
[Figure 8] Figure 8 shows the rate of change (%) in the height, the number of leaves, the fresh weight of the aboveground part, and the density of wheat grown under salt stress conditions from seeds treated with different amounts of tryptophan and oxidized glutathione in Example 4, relative to that of the control group.
[Figure 9] Figure 9 shows the rate of change (%) in the fresh weight of the aboveground part of soybean grown under non-stress conditions from seeds treated with different amounts of tryptophan and oxidized glutathione in Example 5, relative to that of the control group.
[Figure 10] Figure 10 shows the rate of change (%) in the density of soybean grown under non-stress conditions from seeds treated with different amounts of tryptophan and oxidized glutathione in Example 5, relative to that of the control group.
[Figure 11] Figure 11 shows the rate of change (%) in the fresh weight of the aboveground part of soybean grown under salt stress conditions from seeds treated with different amounts of tryptophan and oxidized glutathione in Example 6, relative to that of the control group.
[Figure 12] Figure 12 shows the rate of change (%) in the fresh weight of the aboveground part, the density, and the dry weight of the underground part of soybean grown under salt stress conditions from seeds treated with different amounts of tryptophan and oxidized glutathione in Example 6, relative to that of the control group.
[Figure 13] Figure 13 shows the rate of change (%) in the fresh weight of the aboveground part of rice grown under non-stress conditions from seeds treated with different amounts of tryptophan and oxidized glutathione in Example 7, relative to that of the control group.
[Figure 14] Figure 14 shows the rate of change (%) in the fresh weight of the aboveground part of *Zea mays* grown under non-stress conditions from seeds treated with different amounts of tryptophan and reduced glutathione in Comparative Example 1, relative to that of the control group.
[Figure 15] Figure 15 shows the rate of change (%) in the fresh weight of the aboveground part of *Zea mays* grown under salt stress conditions from seeds treated with different amounts of tryptophan and reduced glutathione in Comparative Example 2, relative to that of the control group.
[Figure 16] Figure 16 shows the ear yield of *Zea mays* grown in the field from *Zea mays* seeds coated with 0.25 g of tryptophan per ton of seeds, *Zea mays* seeds coated with 75 g of oxidized glutathione per ton of seeds, and *Zea mays* seeds coated with 0.25 g of tryptophan and 75 g of oxidized glutathione per ton of seeds in Example 8.

### Description of Embodiments

Hereafter, one or more embodiments of the present invention are described.

### <Glutathione>

In the present application, "glutathione" may be either reduced glutathione (GSH, (N-(N-γ-L-glutamyl-L-cysteinyl)glycine) or oxidized glutathione (GSSG) formed by a disulfide bond between two molecules of GSH, with GSSG being preferable.

Glutathione (GSSG or GSH) may encompass various forms of glutathione, such as a free form in which glutathione is neither bonded to another substance nor ionized, a salt formed by glutathione with an acid or a base, a hydrate thereof, and a mixture thereof.

When GSSG is used as glutathione, a mixture of GSSG and GSH may be used. In such a case, the GSSG content is preferably higher than the GSH content. The total mass of GSSG (the mass calculated in terms of a free form) relative to the total mass of GSSG and GSH (the mass calculated in terms of free forms), in total, is preferably 70% by mass or more, more preferably 80% by mass or more, even more preferably 90% by mass or more, further preferably 95% by mass or more, still further preferably 98% by mass or more, and most preferably 100% by mass.

The salt of GSSG is not particularly limited, as long as it is one or more salts that are acceptable as a fertilizer, such as an ammonium salt, a calcium salt, a magnesium salt, a sodium salt, or a lithium salt. Preferably, it is one or more salts selected from among an ammonium salt, a calcium salt, and a magnesium salt. Examples of the salt of GSSG include 1 ammonium salt of GSSG, 0.5 calcium salt or 1 calcium salt of GSSG, and 0.5 magnesium salt or 1 magnesium salt of GSSG.

### <Amino acid>

In the present application, "amino acid" may be any agriculturally acceptable amino acid, with tryptophan being preferable. In the case of an optically active amino acid, the amino acid may be in the L-form, the D-form, or a mixture of the L-form and the D-form, with the L-form being preferable. A single type of amino acid may be used, or a mixture of two or more types of amino acids may be used. The most preferable amino acid is L-tryptophan.

Examples of amino acids include a free form in which glutathione is neither bonded to another substance nor ionized, a salt formed by amino acid with an acid or a base, a hydrate thereof, and amino acids of various configurations, such as a mixture of any thereof.

### <Agriculturally acceptable carrier>

In the present application, an "agriculturally acceptable carrier" may be any carrier, provided that it can hold glutathione and amino acid, and it may be a liquid carrier or a solid carrier. An example of a solid carrier is a hydrous solid substance. A solid carrier may be in the form of powder or granule.

An "agriculturally acceptable carrier" is preferably a liquid carrier, such as water or an organic solvent. Water as a carrier is not limited to pure water, it may be an aqueous solution, an aqueous suspension, aqueous gel, or aqueous slurry, and a viscous substance may be used. An organic solvent is not limited to a pure organic solvent, and it may be an organic-solvent-based solution, suspension, gel, or slurry, and a viscous substance may be used. Examples of organic solvents include methyl ether, ethyl ether, propyl ether, and butyl ether.

An agriculturally acceptable carrier is preferably a liquid carrier comprising an aqueous solution of a hydrous substance dissolved in water or a solid carrier comprising a water-soluble hydrous substance. Examples of hydrous substances include polyvinylpyrrolidone, alkylene oxide random/block copolymers, a vinyl acetate/vinylpyrrolidone copolymer, an alkylated vinylpyrrolidone copolymer, polyalkylene glycol including polypropylene glycol and polyethylene glycol, polyvinyl acetate, polyvinyl alcohol, gelatin, agar, gum Arabic, gum karaya, gum tragacanth, guar gum, Locust bean gum, xanthan gum, ghatti gum, carragheenan, alginate, casein, dextran, pectin, chitin, 2-hydroxyethyl starch, 2-aminoethyl starch, 2-hydroxyethylcellulose, methylcellulose, carboxymethylcellulose salt, cellulose sulfate, polyacrylamide, alkali metal salt of a maleic anhydride copolymer, and alkali metal salt of poly(meth)acrylate.

A composition for coating plant seeds may further comprise at least one of additives indicated below, according to need. Examples of additives include, but are not limited to, a moisturizing agent, a colorant, a defoaming agent, an UV protective agent, an antifreezing agent, a preservative, a biological control agent or biocide, a surfactant, an emulsifier, an extender, a scavenger, a plasticizer, a phospholipid, a fluidizing agent, a coalescing agent, wax, and/or a filler (e.g., cray, talc, glass fiber, cellulose, and pulverized wood material).

### <Plant>

In one or more embodiments of the present invention, "plants" are not particularly limited, and crop plants are preferable. Examples of crop plants include *Zea mays* (e.g., corn or maize), wheat, barley, rye, oat, rice, soybean, canola (rapeseed), cotton, sunflower, sugar beet, potato, tobacco, broccoli, lettuce, cabbage, cauliflower, coconut, tomato, cucumber, eggplant, melon, pumpkin, okra, pimento, water melon, carrot, Japanese radish, onion, green onion, flowers and ornamental plants, turf grass, and pasture grass. In one or more embodiments of the present invention, "seeds" can be seeds of such plants.

### <Composition for coating plant seeds>

The first embodiment of the present invention relates to a composition for coating plant seeds comprising glutathione, amino acid, and an agriculturally acceptable carrier.

By treating plant seeds with the composition for coating plant seeds according to the present embodiment, plant growth from the seeds, and, in particular, the initial growth after germination, is promoted. The term "initial growth" generally refers to a period from germination to the middle of the vegetative growth stage at which production of dry matter begins to rapidly increase. For example, the initial growth is growth within 90, 60, 30, 25, 21, or 14 days after germination.

By treating plant seeds with the composition for coating plant seeds according to the present embodiment, growth under stress conditions, such as salt stress conditions, is promoted.

The numerical value determined by dividing the fresh weight of the aboveground part of the plants by the height of the plants is defined as the "density." The composition for coating plant seeds according to the present embodiment is, in particular, characterized as increasing the "density" of plants. Because of the effects as described above, the composition for coating plant seeds according to the present embodiment can increase the plant yield. An increase in the plant yield indicates a weight increase in a site of a plant harvested as a crop, and a weight increase in fruits, seeds, leaves, or stalks harvested as a crop is particularly preferable.

Specifically, the composition for coating plant seeds according to the present embodiment is a composition for promoting the initial plant growth, a composition for promoting the plant growth under stress conditions, a composition for increasing the plant yield, or a composition for increasing the plant density (as defined above).

The composition for coating plant seeds according to the present embodiment can be a liquid or solid depending on the form of the agriculturally acceptable carrier. When the composition for coating plant seeds according to the present embodiment is a liquid composition, plant seeds may be coated by soaking the plant seeds in the liquid composition or spraying the liquid composition to the plant seeds, and the coated seeds may then be dried, according to need. When the composition for coating plant seeds according to the present embodiment is a solid composition such as powder, the dried solid composition may be brought into contact with the plant seeds to coat the seeds. Alternatively, a liquid or paste prepared with the addition of water to the solid composition may be brought into contact with the plant seeds to coat the seeds, and the coated seeds may then be dried, according to need.

Concerning the composition for coating plant seeds according to the present embodiment, glutathione is preferably oxidized glutathione, and amino acid is L-tryptophan. By coating plant seeds with oxidized glutathione in combination with L-tryptophan, in particular, the plant growth can be promoted to a significant extent.

The composition for coating plant seeds according to the present embodiment comprises amino acid in an amount of 0.012 parts by weight or more, preferably 0.015 parts by weight or more, and more preferably 0.030 parts by weight or more, relative to 100 parts by weight of glutathione. The upper limit, relative to 100 parts by weight of glutathione, is 167 parts by weight, preferably 84 parts by weight, and more preferably 67 parts by weight. When the weight ratio of glutathione to amino acid is within such range, synergistic effects of promoting the plant growth are particularly significant.

The concentration of glutathione and that of amino acid in the composition for coating plant seeds according to the present embodiment are not particularly limited. The composition for coating plant seeds used to coat 1 ton of plant seeds comprises glutathione (oxidized glutathione, in particular) in an amount of preferably 3 g or more, more preferably 6 g or more, and particularly preferably 15 g or more. While the upper limit is not particularly limited, the composition comprises preferably up to 500 g, and more preferably up to 300 g of glutathione. The composition for coating plant seeds used to coat 1 ton of the plant seeds comprises amino acid (L-tryptophan, in particular) in an amount of preferably 0.009 g or more, more preferably 0.040 g or more, and particularly preferably 0.10 g or more. While the upper limit is not particularly limited, the composition comprises preferably up to 50 g, more preferably up to 30 g, and particularly preferably up to 10 g of amino acid.

### <Coated seeds>

The second embodiment of the present invention relates to coated seeds comprising:
plant seeds; and
on the surface of the seeds, a composition comprising glutathione and amino acid.

The coated seeds according to the present embodiment can be prepared by coating plant seeds with the composition for coating plant seeds according to the first embodiment of the present invention.

Plants that are grown from the coated seeds according to the present embodiment show a high initial growth rate and a high growth rate under stress conditions.

A composition comprising glutathione and amino acid that is present on the seed surface of the coated seeds according to the present embodiment is typically the composition for coating plant seeds according to the first embodiment of the present invention or a composition prepared by dehydrating the composition for coating plant seeds. On the coated seeds according to the present embodiment, the composition comprising glutathione and amino acid is not exclusively present on the seed surface, and a part thereof may infiltrate the seeds.

Concerning the coated seeds according to the present embodiment, preferably, glutathione is oxidized glutathione, and amino acid is L-tryptophan. By coating plant seeds with oxidized glutathione in combination with L-tryptophan, in particular, the plant growth can be promoted to a significant extent.

It is particularly preferable that the composition for coating the coated seeds according to the present embodiment comprise 0.012 parts by weight to 167 parts by weight of amino acid, relative to 100 parts by weight of glutathione. The lower limit of the amount is not particularly limited, provided that the amount is 0.012 parts by weight or more. The lower limit is preferably 0.015 parts by weight, and more preferably 0.030 parts by weight. In addition, the upper limit is not particularly limited, provided that the amount is 167 parts by weight or less. The upper limit is preferably 84 parts by weight, and more preferably 67 parts by weight. When the weight ratio of glutathione to amino acid is within such range, synergistic effects of promoting the plant growth are particularly significant.

The content of glutathione and that of amino acid in the coated seeds according to the present embodiment are not particularly limited. The coated seeds according to the present embodiment comprise glutathione (oxidized glutathione, in particular) in an amount of preferably 3 g or more, more preferably 6 g or more, and particularly preferably 15 g or more, relative to 1 ton thereof. While the upper limit is not particularly limited, the composition comprises preferably up to 500 g, and more preferably up to 300 g of glutathione. The coated seeds according to the present embodiment comprise amino acid (L-tryptophan, in particular) in an amount of preferably 0.009 g or more, more preferably 0.040 g or more, and particularly preferably 0.10 g or more, relative to 1 ton thereof. While the upper limit is not particularly limited, the composition comprises preferably up to 50 g, more preferably up to 30 g, and particularly preferably up to 10 g of amino acid.

<Method for growing plants>

The third embodiment of the present invention relates to a method for cultivating plants comprising:
seeding the coated seeds according to the second embodiment of the present invention; and
growing the plants from the seeded coated seeds.

According to the method of the third embodiment of the present invention, the plant growth, and, in particular, the initial plant growth, is promoted, and plants can be cultivated at a high yield. In addition, plants can be efficiently cultivated under stress conditions, such as salt stress conditions.

In the method according to the present embodiment, the step of seeding the coated seeds and the step of growing plants from the seeded coated seeds can be performed under the conditions adequately selected in accordance with plants.

In the method according to the present embodiment, the growth, and, in particular, the initial growth is promoted in the step of growing plants from the seeded coated seeds. Growth promotion is preferably an increase in the fresh weight of the aboveground part of plants and/or in the plant density (as defined above).

An extent of an increase in the fresh weight of the aboveground part according to the method of the present embodiment is not particularly limited. A rate of an increase in the fresh weight of the aboveground part is preferably 1% or more, more preferably 3% or more, further preferably 5% or more, and particularly preferably 10% or more, compared with a rate of an increase when plants are cultivated from the seeds that are not coated with the composition for coating plant seeds. The upper limit of an increase in the fresh weight of the aboveground part is not particularly limited from the viewpoint of a commercial value, and the upper limit is preferably 100%, more preferably 80%, and particularly preferably 60%.

An extent of an increase in the plant density according to the method of the present embodiment is not particularly limited. A rate of an increase in the plant density is preferably 1% or more, more preferably 3% or more, further preferably 5% or more, and particularly preferably 10% or more, compared with a rate of an increase when plants are cultivated from the seeds that are not coated with the composition for coating plant seeds. The upper limit of an increase in the plant density is not particularly limited from the viewpoint of a commercial value, and the upper limit is preferably 100%, more preferably 80%, and particularly preferably 60%.

In the method according to the present embodiment, the step of growing plants from the seeded coated seeds comprises, for example, growing plants under stress conditions. Examples of stress conditions include salt stress conditions, high-temperature stress conditions, low-temperature stress conditions, and drought stress conditions.

### <Other compositions>

The fourth embodiment of the present invention relates to a composition for promoting the initial plant growth comprising glutathione and 0.012 parts by weight to 167 parts by weight of amino acid, relative to 100 parts by weight of the glutathione.

The fifth embodiment of the present invention relates to a composition for promoting the plant growth under stress conditions comprising glutathione and 0.012 parts by weight to 167 parts by weight of amino acid, relative to 100 parts by weight of the glutathione.

The sixth embodiment of the present invention relates to a composition for increasing the plant yield comprising glutathione and 0.012 parts by weight to 167 parts by weight of amino acid, relative to 100 parts by weight of the glutathione.

The composition according to the fourth, fifth, or sixth embodiment of the present invention is not limited to a composition for coating seeds, and it may be a composition to be applied to a plant body such as a leaf or to be applied to plants through an adequate route, such as application to soil or water.

In particular, the composition according to the fourth embodiment of the present invention can promote the initial plant growth to a significant extent because of synergistic effects achieved with the use of glutathione in combination with amino acid.

In particular, the composition according to the fifth embodiment of the present invention can promote the initial plant growth under stress conditions to a significant extent because of synergistic effects achieved with the use of glutathione in combination with amino acid. Examples of stress conditions include salt stress conditions, high-temperature stress conditions, low-temperature stress conditions, and drought stress conditions.

The composition according to the sixth embodiment of the present invention can increase the plant yield to a significant extent because of synergistic effects achieved with the use of glutathione in combination with amino acid.

In the fourth, the fifth, and the sixth embodiments of the present invention, more preferably, glutathione is oxidized glutathione, and amino acid is L-tryptophan.

### Examples

The present invention is described in greater detail with reference to the following examples, although the present invention is not limited to these examples.

In the following description and the reference figures, "tryptophan" or "Trp" indicates L-tryptophan, "GSSG" indicates oxidized glutathione, and "GSH" indicates reduced glutathione.

### <Example 1>

### Cultivation of Zea mays from coated seeds under non-stress conditions

### Method of experimentation

Dent corn seeds (100 g; the variety: Snow-dent "Otoha") were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.045 g, 0.1225 g, 0.45 g, 5 g, or 50 g and oxidized glutathione in an amount of 0 g, 3 g, 15 g, 150 g, or 300 g per ton of seeds.

Culture soil was filled into 12-cm vinyl pots, and the coated dent corn seeds were seeded at 4 grains/pot. After germination, a differently grown strain was thinned to retain 3 strains in a pot. Cultivation was performed in a glass greenhouse, and inspection was performed 21 days after seeding. The height and the fresh weight of the aboveground part were measured, and the density (the fresh weight of the aboveground part/the height) was determined. The test was repeated 6 times, and the average was determined.

### Results

### Fresh weight of aboveground part

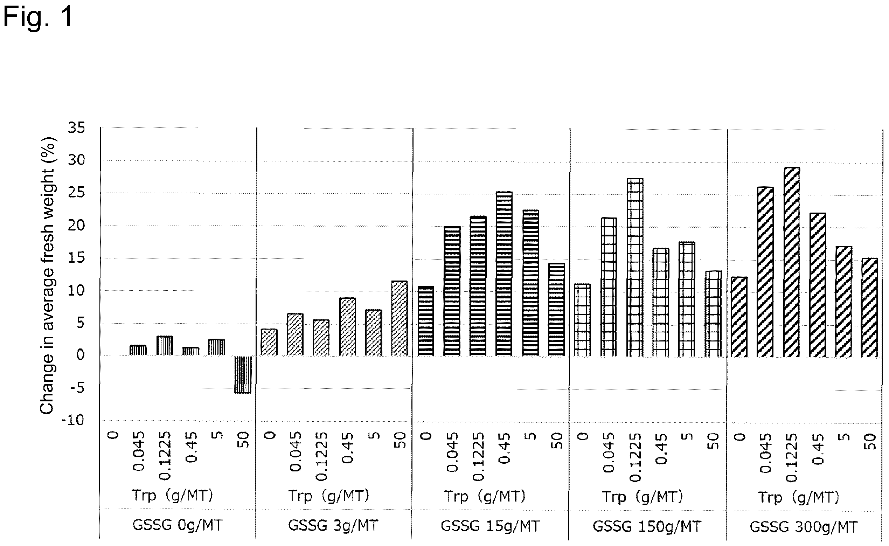

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 1.

Figure 1 demonstrates that the fresh weight of the aboveground part 3 weeks after seeding of the seeds coated selectively with tryptophan is -6% to 4% of the fresh weight without treatment. , No effects of promoting the initial growth were attained with the use of tryptophan by itself. When seeds were coated selectively with GSSG, in contrast, the fresh weight of the aboveground part was increased by 4% to 12%, and effects of promoting the initial growth were attained to a certain extent with the use of GSSG by itself. In addition, the fresh weight of the aboveground part was increased by 9% to 29% with the use of GSSG in combination with tryptophan, and remarkable effects of promoting the initial growth were attained due to synergistic effects of GSSG and tryptophan. When seeds were treated with either or both of 0.1225 g of tryptophan and 150 g of GSSG per ton of the seeds, for example, the fresh weight of the aboveground part was increased by 3% with the use of tryptophan by itself, and that was increased by 11% with the use of GSSG by itself, compared with the fresh weight without treatment. In addition, the fresh weight was increased by 27% with the use of GSSG in combination with tryptophan. , Significant synergistic effects were exerted. Further, effects of promoting the initial growth were observed with the use of GSSG in combination with tryptophan in an amount of 3 g or more per ton of the seeds, and higher synergistic effects would be exerted with the use of GSSG in an amount of 15 g or more.

### Density

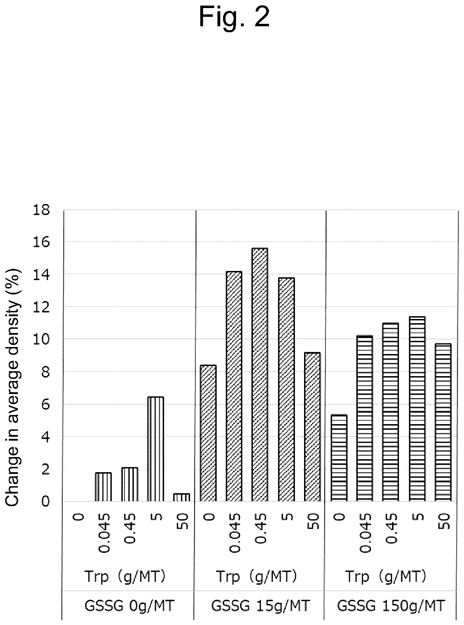

The density (the fresh weight of the aboveground part/the height) of the test groups was indicated as the rate of change (%), relative to the density of the control group. The results are shown in Figure 2.

An increase in the fresh weight of the aboveground part may indicate spindly growth; that is, elongation growth of a plant without substantial growth. A plant showing spindly growth is inferior to a plant showing sufficient growth in terms of health, fragility, pest-resistance, and susceptibility to environmental changes such as hotness or coldness, and, accordingly, such plant is not preferable. In order to verify that a plant has sufficiently grown to have a short fat body instead of a spindly body, evaluation was performed using the density as the indicator. Figure 2 demonstrates that use of GSSG in combination with tryptophan would synergistically increase the density, compared with the use of GSSG or tryptophan by itself. This indicates that an increase in the yield can be expected by promoting the initial growth.

### <Example 2>

### Cultivation of Zea mays from coated seeds under salt stress conditions Method of experimentation

Dent corn seeds (100 g; the variety: Snow-dent "Otoha") were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.009 g, 0.045 g, 0.1225 g, 0.225 g, 0.45 g, or 5 g and oxidized glutathione in an amount of 0 g, 15 g, or 75 g per ton of seeds.

Culture soil containing sodium chloride at 6.0 g/l of the soil was filled into 7.5-cm pots, and the coated dent corn seeds were seeded at 1 grain/pot. Cultivation was performed in a glass greenhouse, and inspection was performed 21 days after seeding. The height, the fresh weight of the aboveground part, and the number of leaves were measured, and the density (the fresh weight of the aboveground part/the height) was determined. The test was repeated 9 times, and the average was determined.

### Results

### Fresh weight of aboveground part

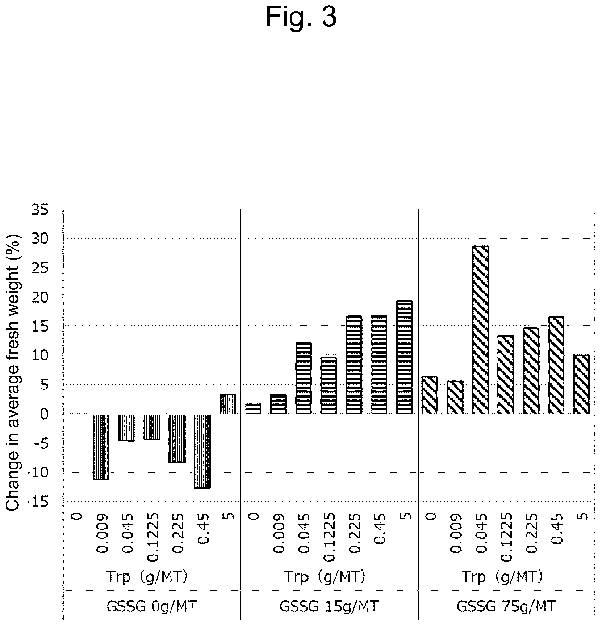

Figure 3 shows the rate of change (%) in the fresh weight of the aboveground part of plants in groups each treated with different amounts of tryptophan and oxidized glutathione, relative to the fresh weight of the aboveground part of plants in the test group (control group) treated with a coating solution not containing tryptophan or oxidized glutathione.

Figure 3 demonstrates that, under salt stress conditions, the fresh weight of the aboveground part 3 weeks after seeding of the seeds coated selectively with tryptophan is -13% to 3% of the fresh weight without treatment. , No effects of promoting the initial growth were attained with the use of tryptophan by itself. When seeds were coated selectively with GSSG, the fresh weight was 2% to 6% of the fresh weight without treatment. , No significant effects of promoting the initial growth were observed. With the use of GSSG in combination with tryptophan, in contrast, the fresh weight of the aboveground part was increased by 3% to 29%, and remarkable effects of promoting the initial growth were attained due to synergistic effects of GSSG and tryptophan. When seeds were coated with a coating solution containing 0.012 parts by weight or more tryptophan, relative to 100 parts by weight of GSSG, in particular, remarkable effects were observed.

### Height, number of leaves, fresh weight of aboveground part, and density

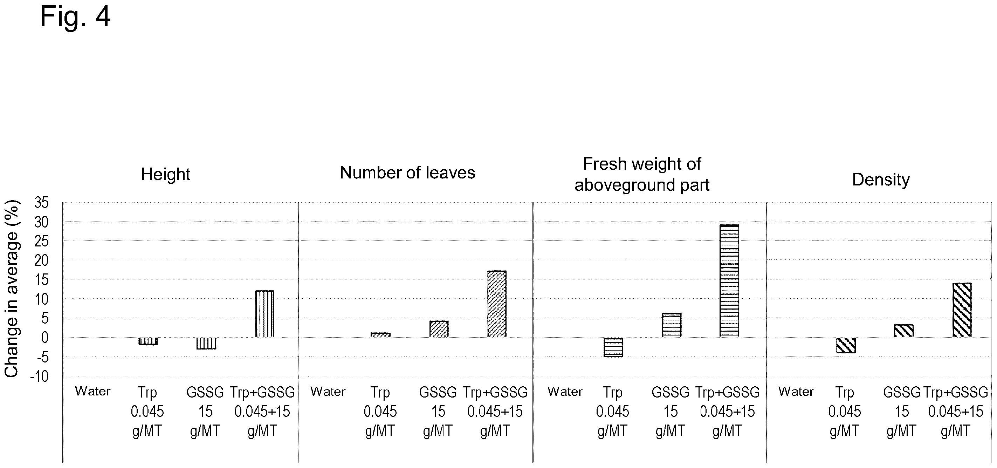

The rates of changes (%) in the height, the number of leaves, the fresh weight of the aboveground part, and the density (the fresh weight of the aboveground part/the height) measured or determined for the test groups, relative to those of the control group were determined. Figure 4 shows the height, the number of leaves, the fresh weight of the aboveground part, and the density of the control group, those of the group treated with 0.045 g of tryptophan per ton of seeds, those of the group treated with 15 g of oxidized glutathione per ton of seeds, and those of the group treated with 0.045 g of tryptophan in combination with 15 g of oxidized glutathione per ton of seeds.

Figure 4 demonstrate that the height, the foliar age, the fresh weight of the aboveground part, and the density are synergistically increased when seeds are treated with the use of 0.045 g of tryptophan in combination with 15 g of GSSG per ton of seeds, compared with the use of tryptophan or GSSG by itself. Effects of seed treatment for promoting the healthy growth were observed under stress conditions.

### <Example 3>

### Cultivation of wheat from coated seeds under non-stress conditions

### Method of experimentation

Wheat seeds (100 g, Quintus) were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.01g, 0.25 g, 5 g, or 10 g and oxidized glutathione in an amount of 0 g, 6g, or 300 g per ton of seeds.

Culture soil was filled into a 96-well cell tray, the coated wheat seeds were seeded at 1 grain/cell, and inspection was performed 2 weeks after seeding. The height and the fresh weight of the aboveground part were measured, and the density (the fresh weight of the aboveground part/the height) was determined. Groups each consisting of 6 plants were subjected to the test, and the test was repeated 4 times.

### Results

### Fresh weight of aboveground part

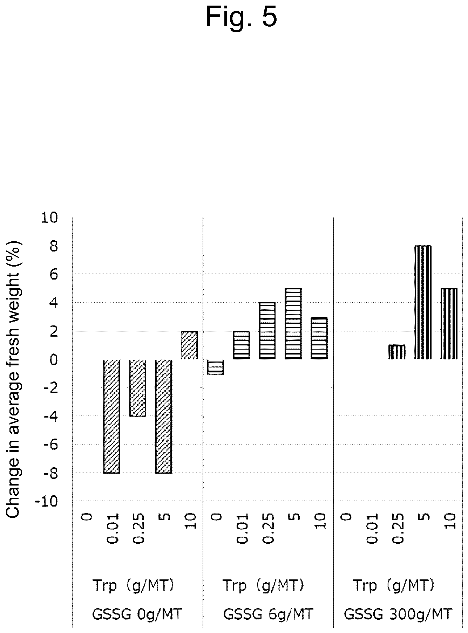

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 5.

Figure 5 demonstrates that the fresh weight of the aboveground part 2 weeks after seeding of the seeds coated selectively with tryptophan is -8% to 2% of the fresh weight without treatment. , No effects of promoting the initial growth were attained with the use of tryptophan by itself. When seeds were coated selectively with GSSG, the fresh weight was -1% to 0% of the fresh weight without treatment. , No effects of promoting the initial growth were attained with the use of GSSG by itself. With the use of GSSG in combination with tryptophan, in contrast, the fresh weight of the aboveground part was increased by 1% to 8%, and remarkable effects of promoting the initial growth were attained due to synergistic effects of GSSG and tryptophan. When seeds were coated with a coating solution containing 0.012 parts by weight or more tryptophan, relative to 100 parts by weight of GSSG, in particular, remarkable effects were observed.

### Density

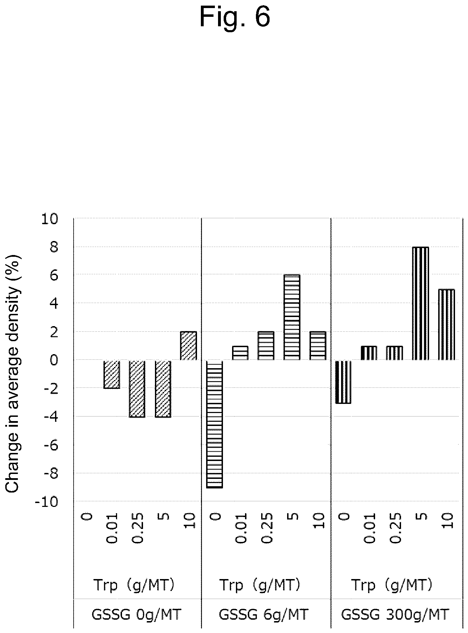

The density (the fresh weight of the aboveground part/the height) of the test groups was indicated as the rate of change (%), relative to the density of the control group. The results are shown in Figure 6.

Figure 6 demonstrates that the density is synergistically increased with the use of GSSG in combination with tryptophan, the plants have sufficiently grown to have short fat bodies, and an increase in the yield can be expected by promoting the initial growth.

### <Example 4>

### Cultivation of wheat from coated seeds under salt stress conditions

### Method of experimentation

Wheat seeds (100 g; the variety: Yumechikara) were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.225 g, 2.25 g, 5 g, 10 g, or 50 g and oxidized glutathione in an amount of 0 g, 15 g, or 300 g per ton of seeds.

Culture soil containing sodium chloride at 4.0 g/l of the soil was filled into 7.5-cm pots, and the coated wheat seeds were seeded at 1 grain/pot. Cultivation was performed in a glass greenhouse, and inspection was performed 16 days after seeding. The height and the fresh weight of the aboveground part were measured, and the density (the fresh weight of the aboveground part/the height) was determined. The test was repeated 9 times, and the average was determined.

### Results

### Fresh weight of aboveground part

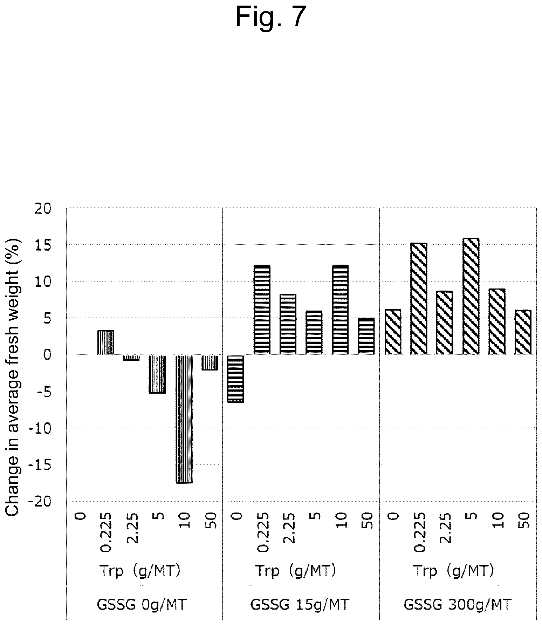

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 7.

Figure 7 demonstrates that, under salt stress conditions, the fresh weight of the aboveground part 2 weeks after seeding of the seeds coated selectively with tryptophan is -17% to 3% of the fresh weight without treatment. , No effects of promoting the initial growth were attained with the use of tryptophan by itself. When seeds were coated selectively with GSSG, the fresh weight was -6% to 6% of the fresh weight without treatment. , Significant effects of promoting the initial growth were not observed. With the use of GSSG in combination with tryptophan, in contrast, the fresh weight of the aboveground part was increased by 5% to 16%, and remarkable effects of promoting the initial growth were attained due to synergistic effects of GSSG and tryptophan.

### Height, number of leaves, fresh weight of aboveground part, and density

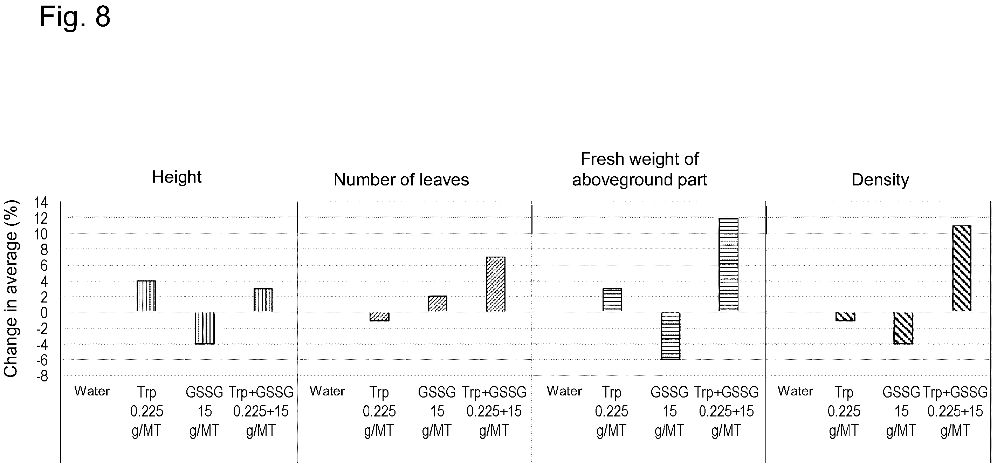

The rates of changes (%) in the height, the number of leaves, the fresh weight of the aboveground part, and the density (the fresh weight of the aboveground part/the height) measured or determined for the test groups, relative to those of the control group were determined. Figure 8 shows the height, the number of leaves, the fresh weight of the aboveground part, and the density of the control group, those of the group treated with 0.225 g of tryptophan per ton of seeds, those of the group treated with 15 g of oxidized glutathione per ton of seeds, and those of the group treated with 0.225 g of tryptophan in combination with 15 g of oxidized glutathione per ton of seeds.

Figure 8 demonstrates that the height, the foliar age, the fresh weight of the aboveground part, and the density are synergistically increased when seeds are treated with the use of 0.225 g of tryptophan in combination with 15 g of GSSG per ton of seeds, compared with the use of tryptophan or GSSG by itself. , Effects of seed treatment for promoting the healthy growth were observed under stress conditions.

### <Example 5>

### Cultivation of soybean from coated seeds under non-stress conditions

### Method of experimentation

Soybean seeds (100 g; the variety: Fukuyutaka or Lenka) were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.05 g, 0.25 g, 0.5 g, or 5 g and oxidized glutathione in an amount of 0 g, 15 g, 30 g, or 300 g per ton of seeds.

Culture soil was filled into a 96-well cell tray, the coated soybean seeds were seeded at 1 grain/cell, and inspection was performed 3 weeks after seeding. The height and the fresh weight of the aboveground part were measured, and the density (the fresh weight of the aboveground part/the height) was determined. Groups each consisting of 6 plants were subjected to the test, and the test was repeated 4 times.

### Results

### Fresh weight of aboveground part

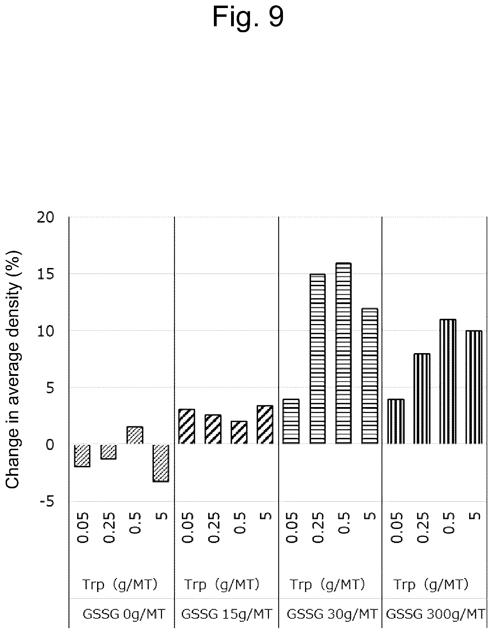

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 9.

Figure 9 demonstrates that the fresh weight of the aboveground part is likely to increase with the use of GSSG in combination with tryptophan, compared with the use of tryptophan by itself. , Remarkable effects of promoting the initial growth were attained due to synergistic effects of GSSG and tryptophan.

### Density

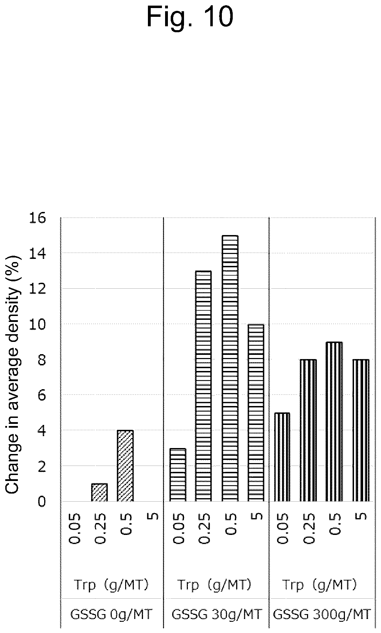

A part of the density (the fresh weight of the aboveground part/the height) of the test groups was indicated as the rate of change (%), relative to the density of the control group. The results are shown in Figure 10.

Figure 10 demonstrates that the density is synergistically increased with the use of GSSG in combination with tryptophan, the plants have sufficiently grown to have short fat bodies, and an increase in the yield can be expected by promoting the initial growth.

### <Example 6>

### Cultivation of soybean from coated seeds under salt stress conditions

### Method of experimentation

Soybean seeds (100 g; the variety: Fukuyutaka) were coated with 800 µl of a coating solution containing tryptophan, oxidized glutathione, polyvinyl alcohol, and a coloring dye in water using a coater (SATEC). Coating was performed using either or both of tryptophan in an amount of 0 g, 0.045 g, 0.225 g, 0.45 g, or 5 g and oxidized glutathione in an amount of 0 g, 15 g, or 75 g per ton of seeds.

Culture soil containing sodium chloride at 1.0 g/l of the soil was filled into 7.5-cm pots, and the coated soybean seeds were seeded at 1 grain/pot. Cultivation was performed in a glass greenhouse, and inspection was performed 21 days after seeding. The fresh weight of the aboveground part, the density (the fresh weight of the aboveground part/the height), and the dry weight of the underground part were measured. The test was repeated 9 times, and the average was determined.

### Results

### Fresh weight of aboveground part

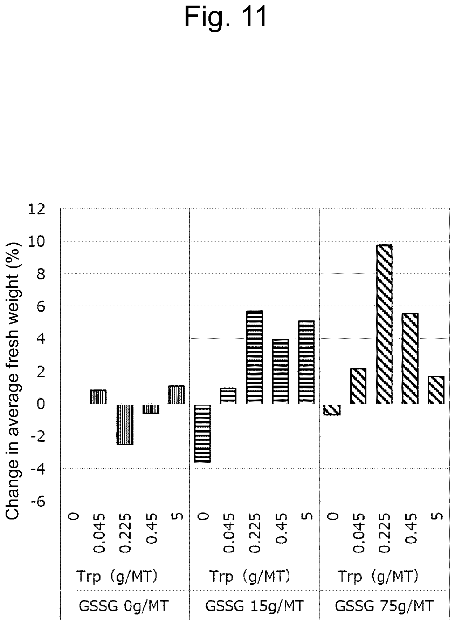

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 11.

Figure 11 demonstrates that, under salt stress conditions, the fresh weight of the aboveground part 3 weeks after seeding of the seeds coated selectively with tryptophan is -2.5% to 1% of the fresh weight without treatment. No effects of promoting the initial growth were attained with the use of tryptophan by itself. When seeds were coated selectively with GSSG, the fresh weight was -3.5% to -1% of the fresh weight without treatment. , Effects of promoting the initial growth were not observed. With the use of GSSG in combination with tryptophan, in contrast, the fresh weight of the aboveground part was increased by 1% to 10%, and remarkable effects of promoting the initial growth were attained due to synergistic effects of GSSG and tryptophan.

### Fresh weight of aboveground part, density, and dry weight of underground part

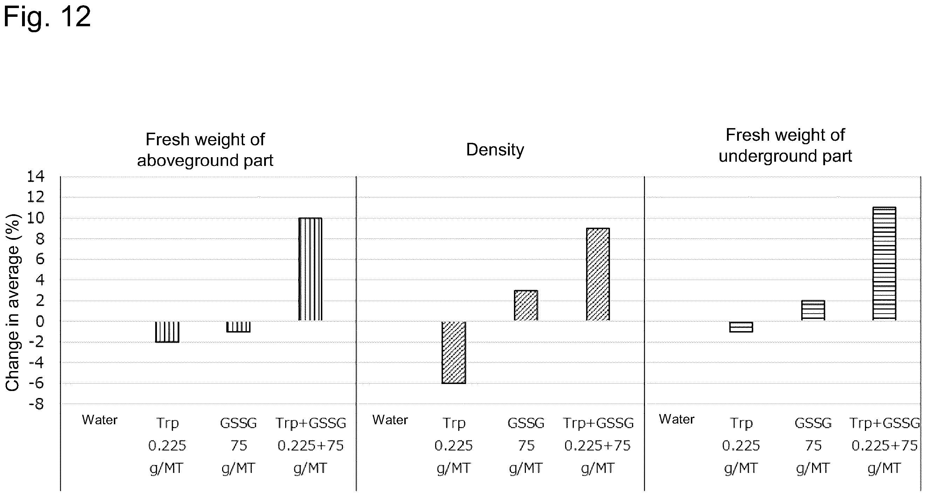

The rates of changes (%) in the fresh weight of the aboveground part, the density (the fresh weight of the aboveground part/the height), and the dry weight of the underground part measured or determined for the test groups, relative to those of the control group were determined. Figure 12 shows the fresh weight of the aboveground part, the density, and the dry weight of the underground part of the control group, those of the group treated with 0.225 g of tryptophan per ton of seeds, those of the group treated with 75 g of oxidized glutathione per ton of seeds, and those of the group treated with 0.225 g of tryptophan in combination with 75 g of oxidized glutathione per ton of seeds.

Figure 12 demonstrates that the fresh weight of the aboveground part, the density, and the dry weight of the underground part are synergistically increased when seeds are treated with the use of 0.225 g of tryptophan in combination with 75 g of GSSG per ton of seeds, compared with the use of tryptophan or GSSG by itself. , Effects of seed treatment for promoting the healthy growth were observed under stress conditions.

### <Example 7>

### Cultivation of rice from coated seeds under non-stress conditions

### Method of experimentation

Rice seeds (100 g; the variety: Emimaru) were coated with 800 µl of a coating solution containing tryptophan, oxidized glutathione, polyvinyl alcohol, and a coloring dye in water using a coater (SATEC). Coating was performed using either or both of tryptophan in an amount of 0 g, 2.25 g, or 5 g and oxidized glutathione in an amount of 0 g or 75 g per ton of seeds.

Culture soil was filled into 12-cm vinyl pots, and the coated rice seeds were seeded at 5 grains/pot. Cultivation was performed in a glass greenhouse, and the fresh weight of the aboveground part was inspected 21 days after seeding. The test was repeated 6 times, and the average was determined.

### Results

### Fresh weight of aboveground part

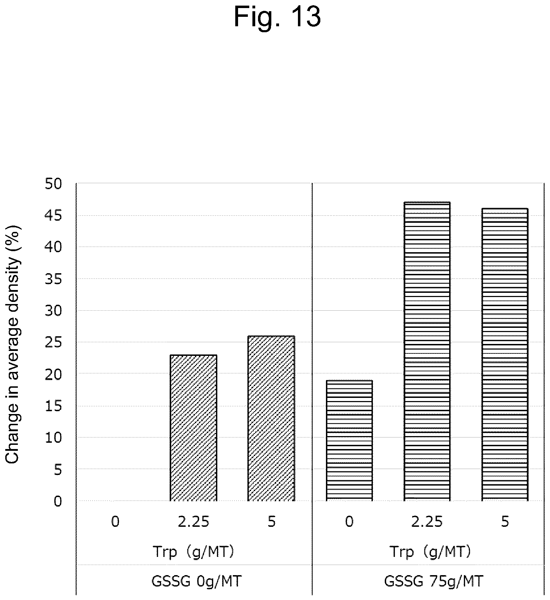

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 13.

Figure 13 demonstrates that the fresh weight of the aboveground part 3 weeks after seeding of the seeds coated selectively with tryptophan is 23% to 26% of the fresh weight without treatment and that the fresh weight attained with the use of the seeds coated selectively with GSSG is 19% of the fresh weight without treatment. , Effects of promoting the initial growth were attained to some extent. With the use of GSSG in combination with tryptophan, in addition, the fresh weight of the aboveground part was increased by 46% to 47%. , The use of GSSG in combination with tryptophan would synergistically promote the initial growth, compared with the use of GSSG or tryptophan by itself.

### <Comparative Example 1>

### Cultivation of Zea mays from coated seeds under non-stress conditions Method of experimentation

Dent corn seeds (100 g; the variety: Snow-dent "Otoha") were coated with 800 µl of a coating solution containing 0.225 g of tryptophan per ton of seeds (i.e., MT-seeds), 0, 1, 5, 15, or 75 g of reduced glutathione per MT-seeds, polyvinyl alcohol, and a coloring dye in water using a coater (SATEC).

Culture soil was filled into 12-cm vinyl pots, and the coated dent corn seeds were seeded at 4 grains/pot. After germination, a differently grown strain was thinned to retain 3 strains in a pot. Cultivation was performed in a glass greenhouse, and inspection was performed 21 days after seeding. The fresh weight of the aboveground part was measured. The test was repeated 6 times, and the average was determined.

### Results

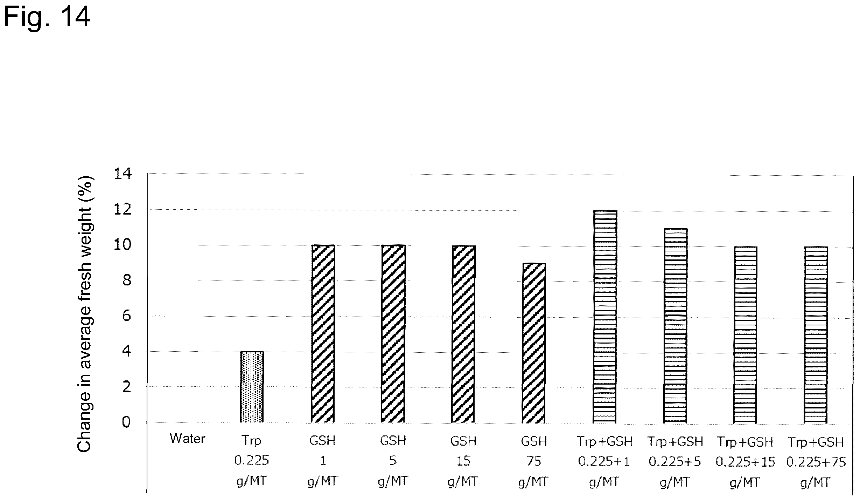

The measured fresh weight of the aboveground part of plants in groups each treated with different amounts of tryptophan and oxidized glutathione was indicated as the rate of change (%), relative to the fresh weight of the aboveground part of plants in the test group (control group) treated with a coating solution not containing tryptophan or oxidized glutathione. The results are shown in Figure 14.

Figure 14 demonstrates that the rate of change in the fresh weight of the aboveground part 3 weeks after seeding of the seeds coated selectively with GSH (reduced glutathione) is 4% of the fresh weight without treatment and that the rate of change in the fresh weight attained with the use of the seeds coated selectively with GSH is 9% to 10% of the fresh weight without treatment. When GSH was used in combination with tryptophan, the rate of change was 10% to 12%. , Synergistic effects of the use of GSH in combination with tryptophan were not observed.

### <Comparative Example 2>

### Cultivation of Zea mays from coated seeds under salt stress conditions Method of experimentation

Dent corn seeds (100 g; the variety: Snow-dent "Otoha") were coated with 800 µl of a coating solution containing 0.225 g of tryptophan per MT-seeds, 0, 1, 5, 15, or 75 g of reduced glutathione per MT-seeds, polyvinyl alcohol, and a coloring dye in water using a coater (SATEC).

Culture soil containing sodium chloride at 6.0 g/l of the soil was filled into 7.5-cm pots, and the coated dent corn seeds were seeded at 1 grain/pot. Cultivation was performed in a glass greenhouse, and inspection was performed 21 days after seeding. The fresh weight of the aboveground part was measured. The test was repeated 9 times, and the average was determined.

### Results

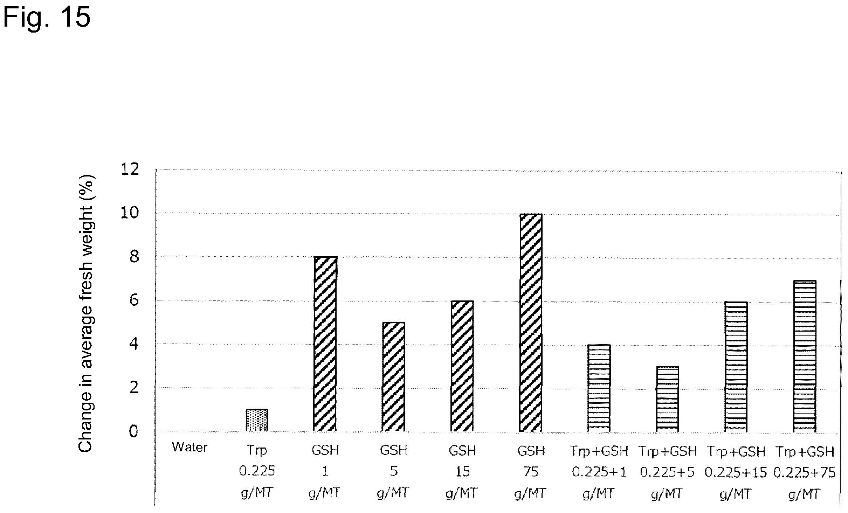

The fresh weight of the aboveground part measured for the test groups treated with different amounts of tryptophan and reduced glutathione was indicated as the rate of change (%), relative to that of the test group (the control group) treated with a coating solution not containing tryptophan or reduced glutathione. The results are shown in Figure 15.

Figure 15 demonstrates that the rate of change in the fresh weight of the aboveground part 3 weeks after seeding of the seeds coated selectively with GSH (reduced glutathione) is 1% of the fresh weight without treatment and that the rate of change in the fresh weight attained with the use of the seeds coated selectively with GSH is 5% to 10% of the fresh weight without treatment. When GSH was used in combination with tryptophan, the rate of change was 3% to 7%. , Synergistic effects of the use of GSH in combination with tryptophan were not observed.

### <Example 8>

### Field test of Zea mays

### Preparation of coated seeds

In the same manner as in Example 1, *Zea mays* seeds coated with 0.25 g of tryptophan per ton of seeds, *Zea mays* seeds coated with 75 g of oxidized glutathione per ton of seeds, and *Zea mays* seeds coated with 0.25 g of tryptophan and 75 g of oxidized glutathione per ton of seeds were prepared. As a control group, seeds without coating were prepared.

### Field cultivation

Location: the Wilderen MAR field, the Kingdom of Belgium
Variety: Like IT
Date of seeding: April 27, 2020
Date of harvesting: October 12, 2020

Cultivation was performed in accordance with the conventional fertilization management technique and pest management technique, and the yield was inspected. Inspection of yield: 120 strains/group; the number of repetition: 4

### Results

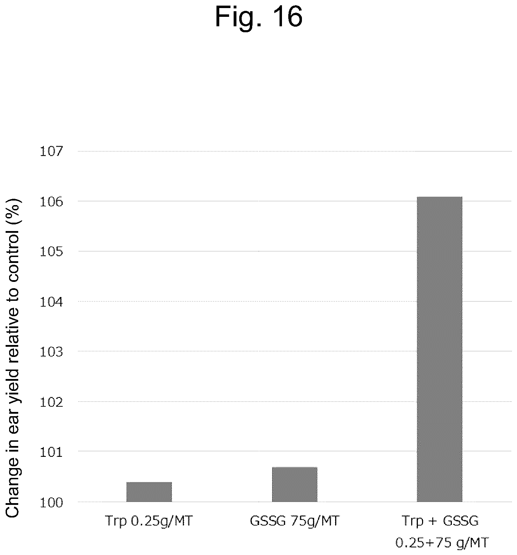

Figure 16 shows the percentage (%) of the ear yield of the *Zea mays* cultivated from the 3 types of coated seeds, relative to the ear yield of *Zea mays* cultivated from the seeds of the control group without coating, which is designated as 100%.

Seeds coated with 0.25 g of tryptophan per ton of seeds, with 75 g of GSSG per ton of seeds, or with 0.25 g of tryptophan in combination with 75 g of GSSG per ton of seeds were seeded in the field, cultivated, harvested, and then inspected. The ear yield was 100.4% with the use of tryptophan alone and it was 100.7% with the use of GSSG alone, relative to the control group. , An increase was not observed in the yield. With the use of tryptophan in combination with GSSG, in contrast, the ear yield was 106.1%, relative to the control group. That is, the ear yield was increased by 6.1% due to synergistic effects of tryptophan and GSSG. Thus, effects of seed treatment to increase the final yield were observed.

### <Example 9>

### Cultivation of wheat from coated seeds under low-temperature stress conditions

Wheat seeds (100 g; the variety: Yumechikara) were coated with 800 µl of a coating solution containing tryptophan, oxidized glutathione, polyvinyl alcohol, and a coloring dye in water using a coater (SATEC). Coating was performed using either or both of 5 g of tryptophan per MT-seeds and 75 g of oxidized glutathione per MT-seeds. Culture soil was filled into 7.5-cm pots, and the coated wheat seeds were seeded at 1 grain/pot. Cultivation was performed in a glass greenhouse before germination, the germinated plants were transferred to and cultivated in an artificial climate chamber with a diurnal period of 12 hours set at 10°C and a nocturnal period of 12 hours set at 5°C, and inspection was performed 6 weeks after seeding. The dry weight of the aboveground part and the dry weight of the underground part were measured. The test was repeated 8 times, and the average was determined.

The results are shown in Table 1. In the table, "%" indicates a value calculated relative to the weight without treatment, which is designated as 100%. While the effects of promoting the initial growth were not observed with the use of tryptophan by itself, effects of promoting the initial growth were observed to some extent with the use of glutathione by itself. With the use of glutathione in combination with tryptophan, in addition, the dry weight of the aboveground part was increased by 17% and the dry weight of the underground part was increased by 24%, relative to the control group. , Such increase was significant. This indicates that use of glutathione in combination with tryptophan would synergistically promote the growth. As described above, use of glutathione in combination with tryptophan would exert effects of promoting the healthy growth under low-temperature stress conditions.

**[Table 1]**

| | Dry weight of aboveground part | | Dry weight of underground part | |
|---|---|---|---|---|
| | g | % | g | % |
| Without treatment | 0.25 | 100 | 0.08 | 100 |
| Trp 5g/MT-seeds | 0.24 | 97 | 0.08 | 101 |
| GSSG 75g/MT-seeds | 0.26 | 106 | 0.09 | 109 |
| Trp + GSSG | 0.29 | 117 | 0.10 | 124 |
| 5 + 75 g/MT-seeds | | | | |

### <Example 10>

### Cultivation of Zea mays from coated seeds under drought stress conditions

### <Method>

Dent corn seeds (100 g; the variety: Snow-dent "Otoha") were coated with 800 µl of a coating solution containing tryptophan, oxidized glutathione, polyvinyl alcohol, and a coloring dye in water using a coater (SATEC). Coating was performed using either or both of 0.25 g of tryptophan per MT-seeds and 75 g of oxidized glutathione per MT-seeds. Culture soil was filled into 12-cm pots, and the coated dent corn seeds were seeded at 7 grains/pot. Cultivation was performed in a glass greenhouse, watering was stopped for 9 days from 1 week after seeding to dry the seeds, then the seeds were allowed to absorb water, cultivation was performed for an additional 4 days, and inspection was then performed. The test was repeated 3 times, and the average was determined.

The results are shown in Table 2. In the table, "%" indicates a value calculated relative to the weight without treatment, which is designated as 100%. The dry weight of the aboveground part and the dry weight of the underground part of the test group treated with glutathione in combination with tryptophan were increased by 10% and 7%, respectively, relative to the dry weight attained without treatment. As described above, use of glutathione in combination with tryptophan would exert effects of promoting the healthy growth under drought stress conditions.

**[Table 2]**

| | Dry weight of aboveground part | | Dry weight of underground part | |
|---|---|---|---|---|
| | g | % | g | % |
| Without treatment | 0.21 | 100 | 0.17 | 100 |
| Trp + GSSG | 0.24 | 110 | 0.18 | 107 |
| 0.25 + 75 g/MT-seeds | | | | |

All publications, patents, and patent applications cited herein are incorporated herein by reference in their entirety.

## Claims

1. A composition for coating plant seeds comprising glutathione, amino acid, and an agriculturally acceptable carrier.

2. The composition according to claim 1, wherein the glutathione is oxidized glutathione.

3. The composition according to claim 1 or 2, wherein the amino acid is L-tryptophan.

4. The composition according to any one of claims 1 to 3, which comprises 0.012 parts by weight to 167 parts by weight of the amino acid, relative to 100 parts by weight of the glutathione.

5. The composition according to any one of claims 1 to 4, which comprises 3 g or more of the glutathione, relative to the amount of the composition used for coating 1 ton of plant seeds.

6. The composition according to any one of claims 1 to 5, which is used for promoting the initial plant growth.

7. The composition according to any one of claims 1 to 6, which is used for promoting the plant growth under stress conditions.

8. The composition according to any one of claims 1 to 7, which is used for increasing the plant yield.

9. Coated seeds comprising:
plant seeds; and
on the surface of the seeds, a composition comprising glutathione and amino acid.

10. The coated seeds according to claim 9, wherein the glutathione is oxidized glutathione.

11. The coated seeds according to claim 9 or 10, wherein the amino acid is L-tryptophan.

12. The coated seeds according to any one of claims 9 to 11, wherein the composition comprises 0.012 parts by weight to 167 parts by weight of the amino acid, relative to 100 parts by weight of the glutathione.

13. The coated seeds according to any one of claims 9 to 12, which comprise 3 g or more of the glutathione, relative to 1 ton of the coated seeds.

14. A method for cultivating plants comprising:
seeding the coated seeds according to any one of claims 9 to 13; and
growing the plants from the seeded coated seeds.

15. The method according to claim 14, wherein the step of growing plants comprises promoting the initial plant growth.

16. The method according to claim 14 or 15, wherein the step of growing plants comprises growing the plants under stress conditions.

17. A composition for promoting the initial plant growth comprising glutathione and 0.012 parts by weight to 167 parts by weight of amino acid, relative to 100 parts by weight of the glutathione.

18. A composition for promoting the plant growth under stress conditions comprising glutathione and 0.012 parts by weight to 167 parts by weight of amino acid, relative to 100 parts by weight of the glutathione.

19. A composition for increasing the plant yield comprising glutathione and 0.012 parts by weight to 167 parts by weight of amino acid, relative to 100 parts by weight of the glutathione.
